# EUROPEAN PATENT SPECIFICATION

(11) **EP 1 796 795 B1**
(45) Date of publication and mention of the grant of the patent: **06.07.2011**
(21) Application number: 05784072.0
(22) Date of filing: 19.09.2005
(51) Int. Cl.: A63B 55/08

(54) **A GOLF TROLLEY**
GOLFWAGEN
CHARIOT DE GOLF

(30) Priority: 17.09.2004 GB 0420739
(43) Date of publication of application: 20.06.2007
(73) Proprietor: Frawley, Adrian, John, Kent, ME9 0RH (GB)
(72) Inventor: Frawley, Adrian, John, Kent, ME9 0RH (GB)
(74) Representative: Jones, Graham Henry
(86) International application number: PCT/GB2005/003586
(87) International publication number: WO 2006/030233

(56) References cited:
- EP-A- 0 639 491
- DE-A1- 10 240 846
- PATENT ABSTRACTS OF JAPAN vol. 017, no. 018 (M-1352), 13 January 1993 (1993-01-13) & JP 04 244489 A (SUZUKI MOTOR CORP), 1 September 1992 (1992-09-01)
- PATENT ABSTRACTS OF JAPAN vol. 016, no. 428 (M-1307), 8 September 1992 (1992-09-08) & JP 04 146875 A (SUZUKI MOTOR CORP), 20 May 1992 (1992-05-20)

## Description

This invention relates to a golf trolley, and more especially, this invention relates to a battery powered golf trolley.

The game of golf is extremely popular. The golf clubs required to play the game are heavy and many golfers prefer to take their golf clubs around a golf course using a golf trolley. These golfers who prefer to use a golf trolley include elderly persons, and persons who simply find the effort of carrying a golf bag around a golf course too strenuous for comfort.

A problem with golf trollies is that they can damage golf courses in wet conditions. More specifically, the wheels of golf trollies can quickly damage grass, especially if there has been prolonged rain. Grass areas can quickly be turned into areas of mud. In view of the damage caused by golf trollies, they are often not allowed on golf courses in wet conditions. This means that person needing to use a golf trolley are often prevented from playing golf due to wet conditions. Since wet conditions are usually present throughout the winter, it is not unusual for such golfers to be prevented from playing golf throughout the entire winter.

DE 102 40 846 A1 discloses a golf trolley comprising a handle, a frame, and a battery-powered drive arrangement, the battery-powered drive arrangement comprising a pair of drive members which each comprises an endless track, drive means for driving the track, and support means which supports the track.

It is an aim of the present invention to obviate or reduce the above mentioned problem.

Accordingly, the present invention provides a golf trolley comprising a handle, a frame, and a battery-powered drive arrangement, the battery-powered drive arrangement comprising a pair of drive members which each comprises an endless track, drive means for driving the track, and support means which supports the track, characterised in that the support means supports the track such that the track has a first portion which is flat for engaging the ground and moving over the ground without damaging the ground, a second portion which extends upwardly from a first end of the first portion and which is straight, and a third portion which extends upwardly from a second end of the first portion and which is straight.

The use of the track enables the golf trolley to be used in wet conditions without damaging golf courses, for example the fairways of golf courses. In addition, the use of the track enables the golf trolley to achieve more traction on hilly or rough terrain that would otherwise be the case if the golf trolley just had wheels. Thus the golf trolley of the present invention is firstly advantageous in that it is able to be used in inclement weather conditions and thus enables golfers requiring a golf trolley to be able to play golf all the year around. The golf trolley is secondly advantageous in that it provides more traction on hilly or rough terrain, which helps the golfers to get around golf courses.

The golf trolley may be one in which the support means in each pair of the drive members comprises a plurality of support wheels. The golf trolley may be one in which there are three of the support wheels, and in which the first, second and third portions of the track define a triangle. More or less than three of the support wheels may however be employed.

The support wheels may be not directly driven support wheels.

With support wheels which are not directly driven, each drive member may include a single drive wheel which engages the inside of the track and thereby drives the track.

Alternatively, each drive member may include a drive wheel which drives at least one intermediate wheel, the intermediate wheel contacting and driving an adjacent one of the not directly driven support wheels. With such an arrangement, there may be one of the intermediate wheels. Alternatively, there may be three of the intermediate wheels. Any suitable and desired number of planet wheels may be employed.

The golf trolley may alternatively be one in which the support wheels are directly driven support wheels.

The golf trolley may be one in which there are four of the support wheels, in which the track has a fourth portion, and in which the first, second, third and fourth portions of the track define a square.

In all embodiments of the invention, the trolley may be one in which the support means includes at least one longitudinally extending support member for facilitating keeping the track flat.

In the embodiment of the invention where the support means comprises the plurality of support wheels, then there may be one of the longitudinally extending support members positioned between each pair of the support wheels.

The battery-powered drive arrangement may include any suitable and appropriate drive train for providing drive from one or more batteries to the drive members. Thus, for example, the battery-operated drive arrangement may include a clutch for engaging and dis-engaging the drive means.

Advantageously, the frame may include a step portion for receiving a golf bag.

The golf trolley will normally include a front wheel mounted on the frame, the front wheel being for resting on the ground when the golf trolley is standing up and at rest.

The golf trolley may be one in which the frame pivots with respect to the battery-powered drive arrangement for enabling a front part of the trolley to be raised for mounting a curb.

The golf trolley of the present invention may be such that it is used with normal wheels in the summer and other periods when the ground is sufficiently dry, and with drive members including the endless track in winter and other periods when the ground is too wet for use by known golf trollies having simple wheels. In order to facilitate changing a golf trolley from a summer drive arrangement including normal wheels, to a winter drive arrangement including the track, the golf trolley of the present invention is advantageously such that each one of the drive members is secured with respect to the frame by a quick-release arrangement. Any suitable and appropriate quick-release arrangement may be employed including nuts with integral wing members for enabling the nuts easily to be removed by hand.

The golf trolley may include pivot means for enabling the drive members to pivot. When pivot means are employed, the drive members may pivot completely through 360°, or they may be constrained to pivot through less than 360°, for example 90° or 180°.

The golf trolley of the present invention may include at least one battery.

Generally, the golf trolley of the present invention may be manufactured to any suitable and desired design and size. The track may be of any desired length and width. Typically, the track will be 100 - 150mm wide and 300 - 400mm long. Generally, the length of track employed may be that designed to cause the track to have an outer general peripheral shape giving its drive member the approximate size of a known golf trolley wheel. The track may be made of any suitable and appropriate materials. A combination of a plastics material and a rubber material is presently preferred. The support means for supporting the track are preferably made of plastics materials but other materials may be employed if desired.

Embodiments of the invention will now be described solely by way of example and with reference to the accompanying drawings in which:
Figure 1 is a side view of a golf trolley of the present invention;
Figure 2 shows a first drive member for use on the golf trolley shown in Figure 1;
Figure 3 shows a second drive member for use on the golf trolley shown in Figure 1;
Figure 4 shows a third drive member for use on the golf trolley shown in Figure 1:
Figure 5 shows a fourth drive member for use on a golf trolley of the present invention; and
Figure 6 illustrates how the golf trolley of Figure 1 can be used to mount a curb.

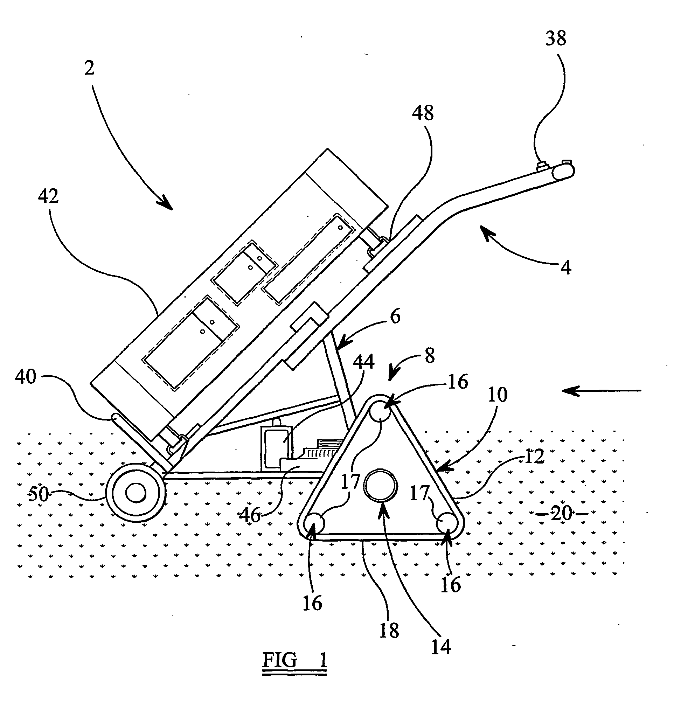

Referring to Figure 1, there is shown a golf trolley 2 comprising a handle 4, a frame 6 and a battery-powered drive arrangement 8.

The battery-powered drive arrangement 8 comprises a pair of drive members 10 arranged one on either side of the golf trolley 2. Each drive member 10 comprises an endless track 12, drive means 14 for driving the track 12, and support means 16 which supports the track 12 such that the track 12 has a portion 18 which is flat for engaging ground 20 and moving over the ground 20 without damaging the ground 20, a second portion which extends upwardly from a first end of the first portion and which is straight, and a third portion which extends upwardly from a second end of the first portion and which is straight.

The support means 16 in each pair of the drive members 10 is in the form of three support wheels 17. The support wheels 17 are such that they are not directly driven.

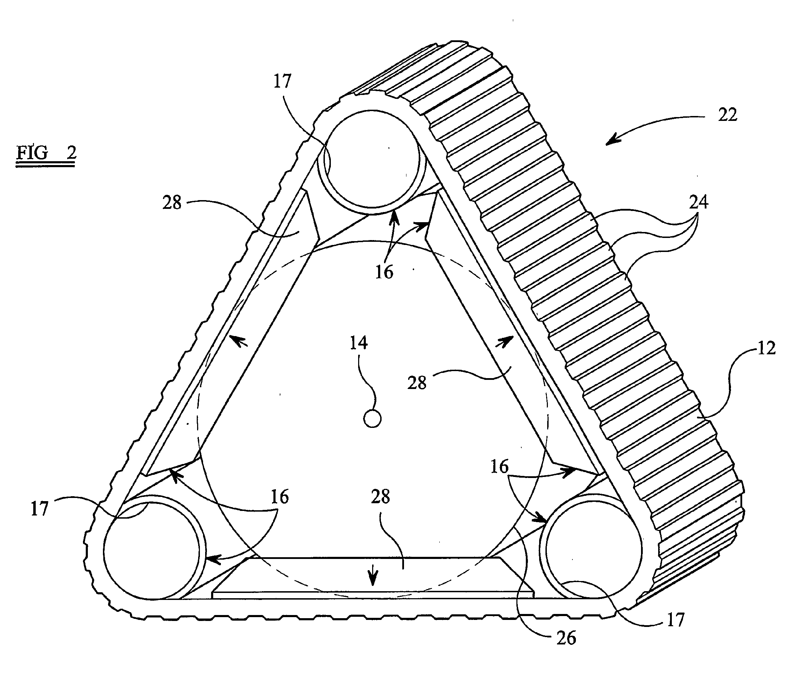

Referring now to Figure 2, there is shown a drive member 22 which is one example of the drive member 10 shown in Figure 1. Similar parts as in Figure 1 have been given the same reference numerals for ease of comparison and understanding. In Figure 2, it will be seen that the track 12 has teeth 24. A single drive wheel 26 engages the inside of the track 12 as shown and thereby drives the track. The support wheels 17 simply maintain the peripheral shape of the track as a triangle and allow the track to rotate.

As also shown in Figure 2, the support means 16 includes three longitudinally extending support members 28. These support members 28 facilitate keeping the track 12 flat. There is one of the support members 28 positioned between each pair of the support wheels 17.

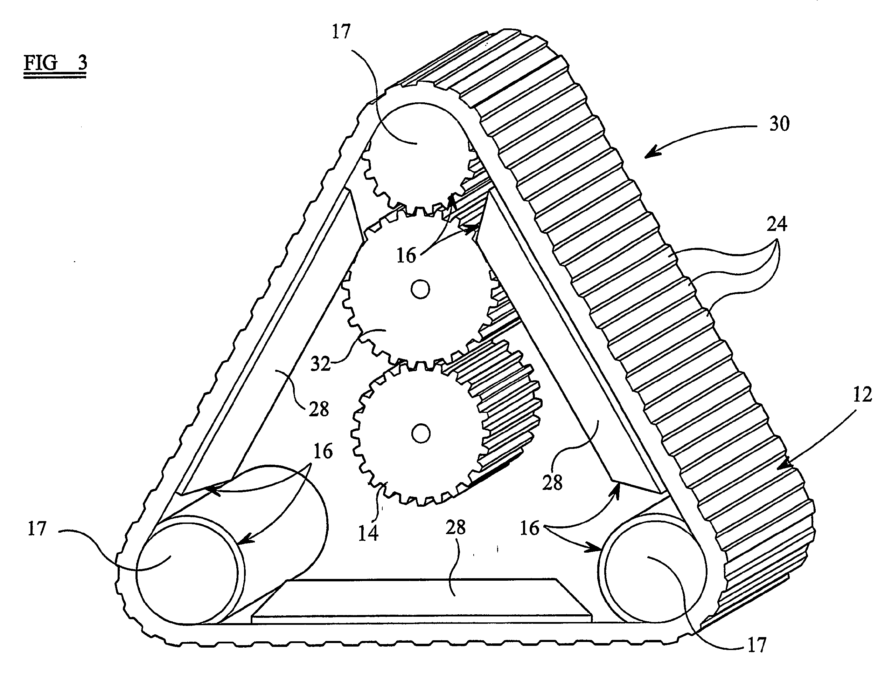

Figure 3 shows a drive member 30 which is similar to the drive member 22 except that the single drive wheel 26 has been replaced by an intermediate wheel 32. The intermediate wheel 32 is driven from the drive means 14. The intermediate wheel 32 drives one of the support wheels 17 as shown and thereby drives the support wheel 17. This support wheel 17 in turn drives the track 12.

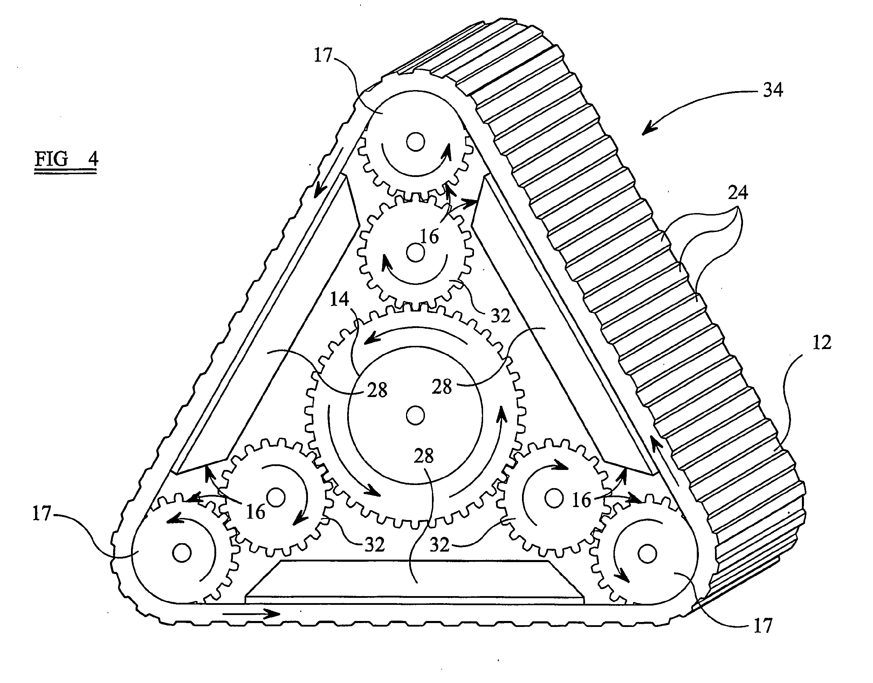

Figure 4 shows a drive member 34 which is like the drive member 30 except that three of the intermediate wheels 32 are employed, with one of the intermediate wheels 32 being for each one of the support wheels 17.

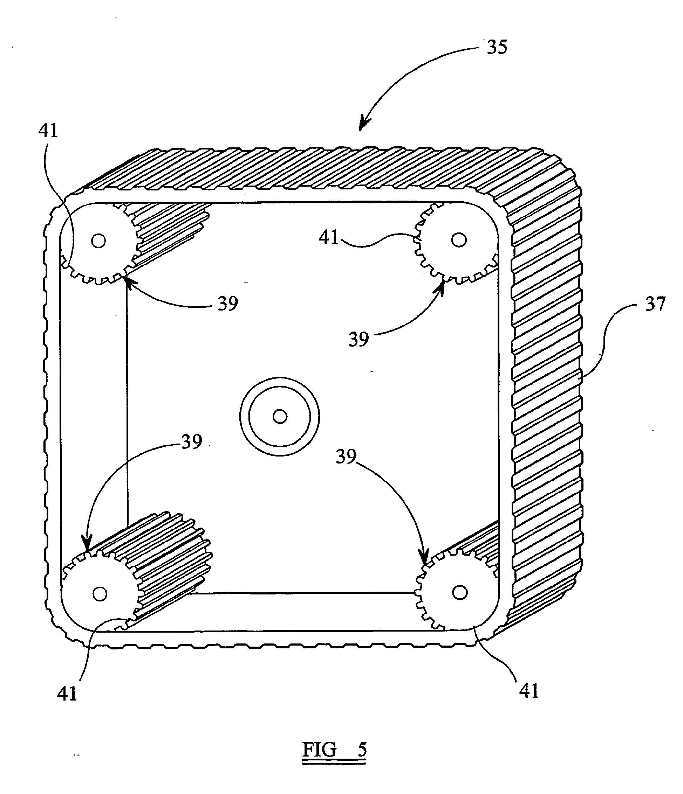

Figure 5 shows a drive member 35 having an endless track 37 which defines a square, rather than a triangle as defined by the endless track 12. The endless track 37 is supported by support means 39 in the form of four support wheels 41. In various embodiments, the support wheels 41 may or may not be driven support wheels, as will be understood from the description of Figures 2, 3 and 4 above.

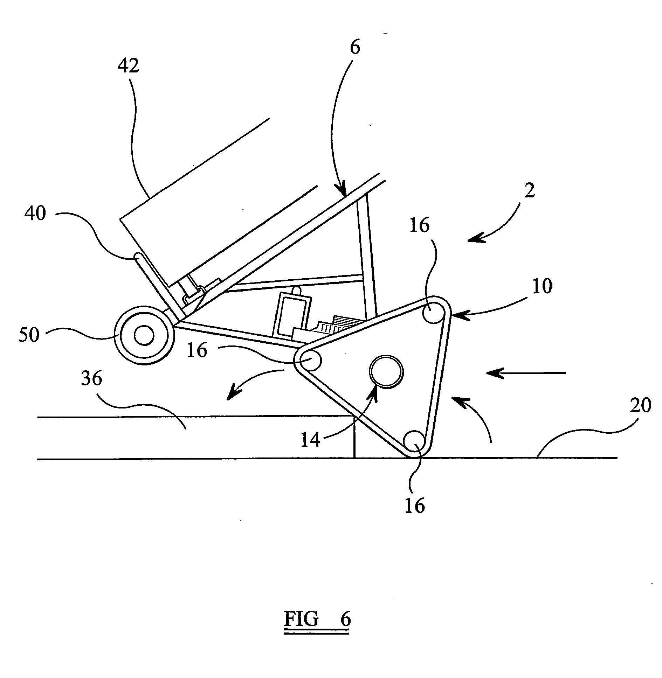

Figure 6 illustrates how the golf trolley of the Figure 1 with its drive members 10 is simply and easily able to mount a curb 36.

Referring back to Figure 1, the battery-powered drive arrangement includes a clutch which is operated by a switch 38, the clutch engaging and dis-engaging the drive means 14. The frame 6 includes a step portion 40 for receiving a golf bag 42. A battery 44 and an electric motor 46 are mounted on the frame 6. The upper part of the golf bag 42 is attached to a bracket 48 on the frame 6.

A front wheel 50 is mounted on the frame 6 as shown. The front wheel 50 is for resting on the ground 20 when the golf trolley 2 is standing up and at rest.

It is to be appreciated that the embodiments of the invention described above with reference to the accompanying drawings have been given by way of example only and that modifications may be effected. Thus, for example, the golf trolley 2 can be of any suitable and appropriate design. Also, for example, any suitable and appropriate designs may be employed for the handle 4 and the frame 6. The components of the trolley 4 can be made of any suitable and appropriate materials. The drive members 10 can advantageously each be secured in position by a quick-release arrangement (not shown) for enabling the drive members 10 easily to be removed in good ground conditions and to be replaced by simple wheels if desired. The support wheels may or may not be electrically driven.

## Claims

1. A golf trolley (2) comprising a handle (4), a frame (6), and a battery-powered drive arrangement (8), the battery-powered drive arrangement (8) comprising a pair of drive members (10) which each comprises an endless track (12), drive means (14) for driving the track (12), and support means (16) which supports the track (12), **characterised in that** the support means (16) supports the track (12) such that the track (12) has a first portion (18) which is flat for engaging the ground (20) and moving over the ground (20) without damaging the ground (20), a second portion which extends upwardly from a first end of the first portion (18) and which is straight, and a third portion which extends upwardly from a second end of the first portion (18) and which is straight.

2. A golf trolley (2) according to claim 1 in which the support means (16) comprises a plurality of support wheels.

3. A golf trolley (2) according to claim 2 in which there are three of the support wheels (17), and in which the first (18), second and third portions of the track (12) define a triangle.

4. A golf trolley (2) according to claim 2 or claim 3 in which the support wheels (17) are not directly driven support wheels.

5. A golf trolley (2) according to claim 4 in which each drive member (10) includes a single drive wheel which engages the inside of the track (12) and thereby drives the track (12).

6. A golf trolley (2) according claim 4 in which each drive member (10) includes a drive wheel which drives at least one intermediate wheel (32), the intermediate wheel (32) contacting and driving an adjacent one of the not directly driven support wheels.

7. A golf trolley (2) according to claim 2 or claim 3 in which the support wheels (17) are directly driven support wheels.

8. A golf trolley (2) according to claim 2 in which there are four of the support wheels (17), in which the track (12) has a fourth portion, and in which the first (18), second, third and fourth portions of the track (12) define a square.

9. A golf trolley (2) according to any one of the preceding claims in which the support means (16) includes at least one longitudinally extending support member for facilitating keeping the track (12) flat.

10. A golf trolley (2) according to any one of the preceding claims in which the battery-powered drive arrangement (8) includes a clutch for engaging and dis-engaging the drive means (14).

11. A golf trolley (2) according to any one of the preceding claims in which the frame (6) includes a step portion (40) for receiving a golf bag (42), and in which the golf trolley (2) includes at least one battery (44).

12. A golf trolley (2) according to any one of the preceding claims and including a front wheel (50) mounted on the frame (6), the front wheel (50) being for resting on the ground (20) when the golf trolley (2) is standing up and at rest.

13. A golf trolley (2) according to any one of the preceding claims in which the frame (6) pivots with respect to the battery-powered drive arrangement (8) for enabling a front part of the golf trolley (2) to be raised for mounting a curb.

14. A golf trolley (2) according to any one of the preceding claims in which each one of the drive members (10) is secured with respect to the frame (6) by a quick release arrangement.

15. A golf trolley (2) according to any one of the preceding claims and including pivot means for enabling the drive members (10) to pivot.

## Patentansprüche

1. Golfwagen (2) mit einem Griff (4), einem Rahmen (6) und einer batteriebetriebenen Antriebsanordnung (8), die ein Paar Antriebsglieder (10) umfasst, die jeweils eine Raupenkette (12), Antriebsmittel (14) zum Antrieb der Raupenkette (12) und ein die Raupenkette (12) stützendes Stützmittel (16) umfassen, **dadurch gekennzeichnet, dass** das Stützmittel (16) die Raupenkette (12) so stützt, dass die Raupenkette (12) einen ersten Abschnitt (16) [sic], der flach ist, so dass er den Boden (20) in Eingriff nehmen und sich über den Boden (20) bewegen kann, ohne diesen zu beschädigen, einen zweiten Abschnitt, der sich von einem ersten Ende des ersten Abschnitts (18) nach oben erstreckt und gerade ist, und einen dritten Abschnitt hat, der sich von einem zweiten Ende des ersten Abschnitts (18) nach oben erstreckt und gerade ist.

2. Golfwagen (2) nach Anspruch 1, wobei das Stützmittel (16) mehrere Stützräder umfasst.

3. Golfwagen (2) nach Anspruch 2, wobei drei Stützräder (17) vorliegen und wobei der erste (18), zweite und dritte Abschnitt der Raupenkette (12) ein Dreieck definieren.

4. Golfwagen (2) nach Anspruch 2 oder 3, wobei die Stützräder (17) keine direkt angetriebenen Stützräder sind.

5. Golfwagen (2) nach Anspruch 4, wobei jedes Antriebsglied (10) ein einziges Antriebsrad aufweist, das die Raupenkette (12) innen in Eingriff nimmt und die Raupenkette (12) **dadurch** antreibt.

6. Golfwagen (2) nach Anspruch 4, wobei jedes Antriebsglied (10) ein Antriebsrad aufweist, das mindestens ein Zwischenrad (32) antreibt, das ein benachbartes der nicht direkt angetriebenen Stützräder kontaktiert und antreibt.

7. Golfwagen (2) nach Anspruch 2 oder 3, wobei die Stützräder (17) direkt angetriebene Stützräder sind.

8. Golfwagen (2) nach Anspruch 2, wobei vier Stützräder (17) vorliegen, wobei die Raupenkette (12) einen vierten Abschnitt hat und wobei der erste (18), zweite, dritte und vierte Abschnitt der Raupenkette (12) ein Quadrat definieren.

9. Golfwagen (2) nach einem der vorhergehenden Ansprüche, wobei das Stützmittel (16) mindestens ein sich in Längsrichtung erstreckendes Stützglied aufweist, damit die Raupenkette (12) leicht flach gehalten werden kann.

10. Golfwagen (2) nach einem der vorhergehenden Ansprüche, wobei die batteriebetriebene Antriebsanordnung (8) eine Kupplung zum Einrücken und Ausrücken der Antriebsmittel (14) aufweist.

11. Golfwagen (2) nach einem der vorhergehenden Ansprüche, wobei der Rahmen (6) einen Stufenabschnitt (40) zur Aufnahme einer Golftasche (42) aufweist und wobei der Golfwagen (2) mindestens eine Batterie (44) aufweist.

12. Golfwagen (2) nach einem der vorhergehenden Ansprüche, mit einem Vorderrad (50), das am Rahmen (6) montiert ist und auf dem Boden (20) ruht, wenn der Golfwagen (2) aufrecht steht und ruht.

13. Golfwagen (2) nach einem der vorhergehenden Ansprüche, wobei der Rahmen (6) bezüglich der batteriebetriebenen Antriebsanordnung (8) schwenkt, damit ein vorderer Teil des Golfwagens (2) angehoben werden kann, um über eine Bordsteinkante zu fahren.

14. Golfwagen (2) nach einem der vorhergehenden Ansprüche, wobei jedes der Antriebsglieder (10) über eine Schnelllöseanordnung am Rahmen (6) befestigt ist.

15. Golfwagen (2) nach einem der vorhergehenden Ansprüche, mit Schwenkmitteln, damit die Antriebesglieder (10) schwenken können.

## Revendications

1. Chariot de golf (2), comprenant une poignée (4), un cadre (6) et un agencement d'entraînement alimenté par batterie (8), l'agencement d'entraînement alimenté par batterie (8) comprenant une paire d'organes d'entraînement (10), chacun comprenant une chenille sans fin (12), un moyen d'entraînement (14) pour entraîner la chenille (12) et un moyen de support (16) qui supporte la chenille (12), **caractérisé en ce que** le moyen de support (16) supporte la chenille (12) de telle sorte que la chenille (12) possède une première partie (18) qui est plane pour prendre appui sur le sol (20) et se déplacer sur le sol (20) sans endommager le sol (20), une deuxième partie qui s'étend vers le haut depuis une première extrémité de la première partie (18) et qui est rectiligne, et une troisième partie qui s'étend vers le haut depuis une deuxième extrémité de la première partie (18) et qui est rectiligne.

2. Chariot de golf (2) selon la revendication 1, dans lequel le moyen de support (16) comprend une pluralité de roues de support.

3. Chariot de golf (2) selon la revendication 2, dans lequel il y a trois roues de support (17), et dans lequel les première (18), deuxième et troisième parties de la chenille (12) définissent un triangle.

4. Chariot de golf (2) selon la revendication 2 ou la revendication 3, dans lequel les roues de support (17) sont des roues de support non directement entraînées.

5. Chariot de golf (2) selon la revendication 4, dans lequel chaque organe d'entraînement (10) comporte une roue d'entraînement unique qui entre en prise avec l'intérieur de la chenille (12) et par conséquent entraîne la chenille (12).

6. Chariot de golf (2) selon la revendication 4, dans lequel chaque organe d'entraînement (10) comporte une roue d'entraînement qui entraîne au moins une roue intermédiaire. (32), la roue intermédiaire (32) venant au contact de et entraînant une roue adjacente parmi les roues de support non directement entraînées.

7. Chariot de golf (2) selon la revendication 2 ou la revendication 3, dans lequel les roues de support (17) sont des roues de support directement entraînées.

8. Chariot de golf (2) selon la revendication 2, dans lequel il y a quatre roues de support (17), dans lequel la chenille (12) possède une quatrième partie, et dans lequel les première (18), deuxième, troisième et quatrième parties de la chenille (12) définissent un carré.

9. Chariot de golf (2) selon l'une quelconque des revendications précédentes, dans lequel le moyen de support (16) comporte au moins un organe de support s'étendant longitudinalement pour aider à maintenir la chenille (12) plane.

10. Chariot de golf (2) selon l'une quelconque des revendications précédentes, dans lequel l'agencement d'entraînement alimenté par batterie (8) comporte un embrayage pour entrer en prise avec le moyen d'entraînement (14) et se désaccoupler de ce dernier.

11. Chariot de golf (2) selon l'une quelconque des revendications précédentes, dans lequel le cadre (6) comporte une partie en gradin (40) pour recevoir un sac de golf (42), et dans lequel le chariot de golf (2) comporte au moins une batterie (44).

12. Chariot de golf (2) selon l'une quelconque des revendications précédentes et comportant une roue avant (50) montée sur le cadre (6), la roue avant (50) étant destinée à reposer sur le sol (20) lorsque le chariot de golf (2) est en position debout et à l'arrêt.

13. Chariot de golf (2) selon l'une quelconque des revendications précédentes, dans lequel le cadre (6) pivote par rapport à l'agencement d'entraînement alimenté par batterie (8) pour permettre à une partie avant du chariot de golf (2) d'être relevée afin de monter sur une bordure de trottoir.

14. Chariot de golf (2) selon l'une quelconque des revendications précédentes, dans lequel chacun des organes d'entraînement (10) est fixé par rapport au cadre (6) au moyen d'un agencement d'attache rapide.

15. Chariot de golf (2) selon l'une quelconque des revendications précédentes et comportant un moyen de pivotement pour permettre aux organes d'entraînement (10) de pivoter.
